# NEUE EUROPÄISCHE PATENTSCHRIFT

(11) **EP 3 338 315 B2**
(45) Veröffentlichungstag und Bekanntmachung des Hinweises auf die Entscheidung über den Einspruch: **19.10.2022**
(45) Hinweis auf die Patenterteilung: 19.06.2019
(21) Anmeldenummer: 16748293.4
(22) Anmeldetag: 03.08.2016
(51) Int. Cl.: H01M 2/10, H01M 10/625, H01M 10/6557, H01M 10/6567, H01M 10/6554, H01M 10/613, H01M 10/6556

(54) **BATTERIEPACK**
BATTERY PACK
BATTERIE

(30) Priorität: 21.08.2015 DE 102015216029
(43) Veröffentlichungstag der Anmeldung: 27.06.2018
(73) Patentinhaber: Robert Bosch GmbH, 70442 Stuttgart (DE)
(72) Erfinder: STADTER, Sabine, 96050 Bamberg (DE); TEUBER, Johannes, Anderson, South Carolina 2962 (US); KLONCZYNSKI, Alexander, Bangalore 560030 (IN); KEGEL, Timo, 96117 Memmelsdorf (DE); SCHUBERT, Gerhard, 96129 Strullendorf (DE); POSTLER, Florian, 96110 Schesslitz (DE)
(86) Internationale Anmeldenummer: PCT/EP2016/068485
(87) Internationale Veröffentlichungsnummer: WO 2017/032571

(56) Entgegenhaltungen:
- EP-A1- 2 685 523
- EP-A1- 2 955 780
- EP-A2- 2 065 963
- WO-A1-2014/139710
- DE-A1-102009 045 007
- DE-A1-102013 018 413
- FR-A1- 2 974 453
- US-A1- 2012 223 113
- US-A1- 2013 004 822
- US-A1- 2017 025 655

## Beschreibung

Die Erfindung betrifft ein Batteriepack, welches ein Gehäuse, in dem mehrere Batteriemodule mit mehreren Batteriezellen angeordnet sind, sowie ein Kühlsystem zur Kühlung der Batteriezellen umfasst.

### Stand der Technik

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie umfasst dabei eine oder mehrere Batteriezellen.

In einem Akkumulator finden insbesondere sogenannte Lithium-Ionen-Batteriezellen Verwendung. Diese zeichnen sich unter anderem durch hohe Energiedichten, thermische Stabilität und eine äußerst geringe Selbstentladung aus. Lithium-Ionen-Batteriezellen kommen unter anderem in Kraftfahrzeugen, insbesondere in Elektrofahrzeugen (Electric Vehicle, EV), Hybridfahrzeugen (Hybrid Electric Vehicle, HEV) sowie Plug-In-Hybridfahrzeugen (Plug-In-Hybrid Electric Vehicle, PHEV) zum Einsatz.

Eine gattungsgemäße Batteriezelle ist in der DE 10 2012 217 451 A1 offenbart. Die Batteriezelle weist ein Zellengehäuse auf, welches beispielsweise aus einem Metall gefertigt ist. Das Zellengehäuse ist prismatisch, insbesondere quaderförmig, ausgestaltet und druckfest ausgebildet. Die Batteriezelle weist dabei ein positives Terminal und ein negatives Terminal zur elektrischen Kontaktierung auf.

Mehrere Batteriezellen werden zu einem Batteriemodul zusammengefasst und elektrisch miteinander verschaltet. Dazu werden die Terminals der Batteriezellen mittels Zellverbinder miteinander verbunden. Mehrere Batteriemodule werden zu einem Batteriepack zusammengefasst und in einem gemeinsamen Gehäuse angeordnet.

Die einzelnen Batteriezellen erwärmen sich während des Betriebs. Deshalb umfassen Batteriepacks oder Batteriemodule in der Regel ein Kühlsystem zur Kühlung der Batteriezellen.

Aus der DE 10 2013 210 932 A1 ist ein Batteriesystem mit einem Gehäuse bekannt, in dem mehrere Batteriezellen angeordnet sind. Das Gehäuse weist dabei eine Wandung auf, in der Kühlkanäle vorgesehen sind, durch die ein Kühlmittel strömt.

Die DE 10 2013 204 087 A1 offenbart ein Batteriemodul, welches in einem gasdichten Gehäuse angeordnet ist. Innerhalb des Gehäuses ist dabei eine Kühleinrichtung vorgesehen, welche in thermischer Verbindung zu den Batteriezellen steht.

Aus der DE 21 2012 000 235 U1 geht ein Batteriepack mit einer Mehrzahl von Batteriezellen hervor, das in einem Gehäuse mit Luftkühlung angeordnet ist. In dem Gehäuse sind dabei als Kanäle ausgebildete Kühlungsluftpassagen vorgesehen.

In der DE 10 2013 213 877 A1 ist ein Batteriesystem offenbart, das mehrere Batteriezellen umfasst, die in einem gemeinsamen Gehäuse angeordnet sind.

Zur Kühlung der Batteriezellen weist das Gehäuse Lufteinlässe und Luftauslässe auf, über welche den Batteriezellen kühle Luft zugeleitet wird, und erwärmte Luft abgeführt wird. Die Druckschrift DE 10 2009 045 007 A1 offenbart einen aus dem Stand der Technik bekannten Batteriepack. Stand der Technik sind weiterhin US 2013 0004 822 A1 und EP 2 955 780 A1 sowie 2 685 523 A1.

### Offenbarung der Erfindung

Es wird ein Batteriepack vorgeschlagen, welches ein Gehäuse, in dem mehrere Batteriemodule mit mehreren Batteriezellen angeordnet sind, sowie ein Kühlsystem zur Kühlung der Batteriezellen umfasst. Das Gehäuse des Batteriepacks ist beispielsweise aus einem Metall, insbesondere aus Aluminium, gefertigt.

Das Kühlsystem umfasst mindestens eine Kühlplatte, welche außerhalb des Gehäuses des Batteriepacks angeordnet ist. Dabei liegt die mindestens eine Kühlplatte flächig an einer Deckplatte des Gehäuses an, und eine Wärmeabfuhr erfolgt von der mindestens einen Batteriezelle durch die Deckplatte hindurch zu der Kühlplatte. Das Gehäuse des Batteriepacks, insbesondere die Deckplatte, weist dabei eine verhältnismäßig hohe Wärmeleitfähigkeit auf.

Das Gehäuse ist gasdicht ausgebildet. Bei einem Batteriepack, welches in einem Fahrzeug eingesetzt wird, wird dadurch verhindert, dass im Fall einer Entgasung einer Batteriezelle freigesetztes Gas in den Fahrgastraum eintritt.

Vorteilhaft weist das Gehäuse eine Austrittsöffnung für freigesetztes Gas auf. Besagte Austrittsöffnung ist dabei im gewöhnlichen Betrieb des Batteriepacks verschlossen, und das Gehäuse ist gasdicht. Wenn bei einem Störfall Gas aus den Batteriezellen freigesetzt wird und ein Überdruck innerhalb des Gehäuses entsteht, öffnet die Austrittsöffnung und lässt das freigesetzte Gas entweichen, um einen zu hohen Druck innerhalb des Gehäuses zu vermeiden, der zu einer Explosion führen könnte. Die Austrittsöffnung ist dabei derart angeordnet, dass entweichendes Gas nicht in den Fahrgastraum eindringen kann.

Das Gehäuse umfasst zwei parallel verlaufende Seitenwände und zwei parallel verlaufende Frontwände, welche miteinander verbunden sind. Die Seitenwände sind dabei rechtwinklig zu den Frontwänden angeordnet. Die Seitenwände und die Frontwände bilden zusammen einen Rahmen. Besagter Rahmen ist dabei besonders starr und verwindungssteif ausgebildet und schützt die Batteriezellen des Batteriepacks auch im Crashfall.

Vorzugsweise sind die Batteriemodule dabei an dem Rahmen fixiert. Somit sind die Batteriezellen der mehreren-Batteriemodule auch im Crashfall durch den starr und verwindungssteif ausgebildeten Rahmen geschützt.

Vorzugsweise umfasst das Gehäuse des Batteriepacks auch zwei parallel verlaufende Deckplatten, welche den Rahmen beidseitig verschließen. Die Deckplatten sind dabei rechtwinklig zu den Seitenwänden und rechtwinklig zu den Frontwänden angeordnet. Das Gehäuse ist somit zumindest annähernd quaderförmig ausgebildet.

Gemäß einer vorteilhaften Weiterbildung der Erfindung umfasst das Kühlsystem mindestens einen Strömungskanal, welcher in mindestens einer Seitenwand und/oder in mindestens einer Frontwand des Rahmens vorgesehen ist. Somit kann eine zusätzliche Kühlung der Batteriezellen über die Seitenwände sowie über die Frontwände des Rahmens erfolgen.

Erfindungsgemäß umfasst der Rahmen eine Trennwand, welche parallel zu den Seitenwänden verläuft. Erfindungsgemäß sind die Batteriemodule in zwei Gruppen zu jeweils vier Batteriemodulen angeordnet und ist auf jeder Seite der Trennwand jeweils eine Gruppe mit vier Batteliemodulen angeordnet. Besagte Trennwand ist dabei mit den beiden Frontwänden fest verbunden und stabilisiert und versteift den Rahmen des Gehäuses zusätzlich.

Besonders vorteilhaft umfasst das Kühlsystem mindestens einen Strömungskanal, welcher in der Trennwand des Rahmens vorgesehen ist. Somit kann eine zusätzliche Kühlung der Batteriezellen über die Trennwand des Rahmens erfolgen.

Vorzugsweise umfasst das Kühlsystem dabei ein flüssiges Kühlmedium.

Ein erfindungsgemäßes Batteriepack findet vorteilhaft Verwendung in einem Elektrofahrzeug (EV), in einem Hybridfahrzeug (HEV), in einem Plug-In-Hybridfahrzeug (PHEV), in einer stationären Batterie oder in einer Batterie in einer marinen Anwendung.

### Vorteile der Erfindung

Durch die erfindungsgemäße Ausgestaltung des Batteriepacks muss keine Leitung des Kühlsystems in das gasdichte Gehäuse hinein geführt werden. Dadurch ist keine separate Abdichtung des Kühlsystems gegen die Batteriezellen erforderlich und die Anzahl der Schnittstellen des Batteriepacks ist verringert. Auch ist die Anbindung des Batteriepacks an ein kundenspezifisches Kühlungssystem, welches insbesondere in einem Kraftfahrzeug vorhanden ist, vereinfacht möglich. Auch ist das Volumen des Batteriepacks verkleinert und der erforderliche Bauraum somit verringert.

Auch ist die Anzahl an dichtheitskritischen Stellen des Kühlsystems reduziert, wodurch Dichtheitsprüfungen des Kühlsystems bei der Fertigung des Batteriepacks entfallen können. Bei einer eventuellen Undichtigkeit des Kühlsystems ist ferner ausgeschlossen, dass Kühlflüssigkeit in Kontakt mit den Batteriezellen gelangt.

### Kurze Beschreibung der Zeichnungen

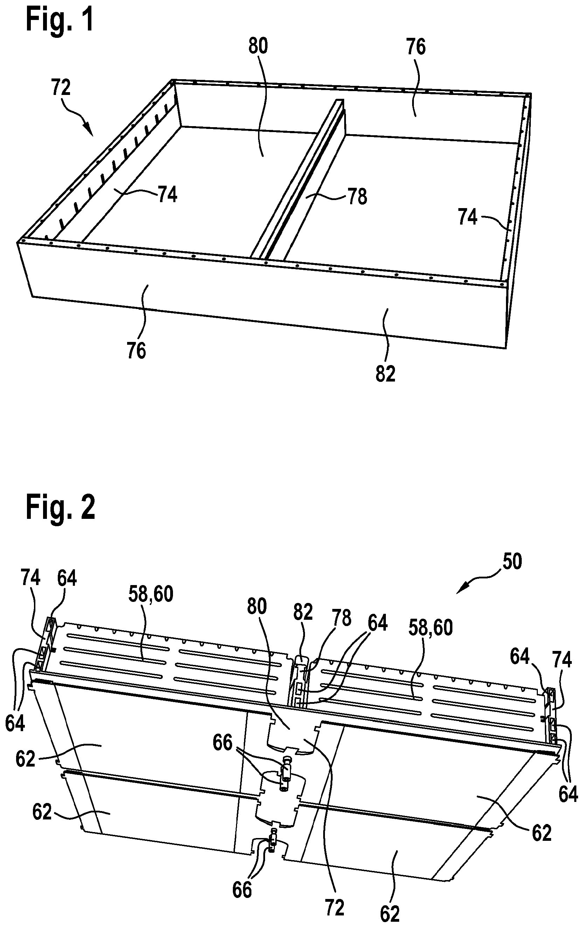

Ausführungsformen der Erfindung werden anhand der Zeichnungen und der nachfolgenden Beschreibung näher erläutert.
- Figur 1:
   • eine perspektivische Darstellung eines Gehäuses eines Batteriepacks, wobei eine Deckplatte entfernt ist,
- Figur 2:
   • eine perspektivische Darstellung eines Batteriepacks, wobei eine Frontwand und eine Deckplatte des Gehäuses entfernt sind,
- Figur 3:
   • eine vergrößerte Darstellung eines Teilbereichs aus Figur 2 ,
- Figur 4:
   • eine perspektivische Darstellung eines Batteriepacks, wobei eine Deckplatte des Gehäuses entfernt ist, und
- Figur 5:
   • eine perspektivische Darstellung eines vollständigen Batteriepacks.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

Figur 1 zeigt eine perspektivische Darstellung eines Gehäuses 72 eines Batteriepacks 50. Das Gehäuse 72 weist einen Rahmen 82 sowie zwei Deckplatten 80 auf. In der vorliegenden Darstellung ist dabei eine der Deckplatten 80 entfernt.

Der Rahmen 82 umfasst zwei parallel zueinander verlaufende Seitenwände 74 sowie zwei parallel zueinander verlaufende Frontwände 76. Ferner umfasst der Rahmen 82 eine Trennwand 78, welche parallel zu den beiden Seitenwänden 74 und zwischen diesen verläuft.

Die Frontwände 76 sind dabei rechtwinklig zu den Seitenwänden 74 sowie zu der Trennwand 78 angeordnet. Die Trennwand 78 ist mit beiden Frontwänden 76 verbunden. Ebenso sind die Seitenwände 74 mit beiden Frontwänden 76 verbunden. Der aus den Seitenwänden 74, den Frontwänden 76 und der Trennwand 78 gebildete Rahmen 82 ist besonders starr und verbindungssteif ausgebildet.

Der so gebildete Rahmen 82 weist zwei Öffnungen auf, welche später von den Deckplatten 80 verschlossen sind. Die Deckplatten 80 verlaufen parallel zueinander sowie rechtwinklig zu den Seitenwänden 74, den Frontwänden 76 und der Trennwand 78. Das aus dem Rahmen 82 und den Deckplatten 80 gebildete Gehäuse 72 des Batteriepacks 50 ist somit annähernd quaderförmig ausgebildet.

Figur 2 zeigt eine perspektivische Darstellung des Batteriepacks 50. In der gezeigten Darstellung sind dabei eine Frontwand 76 und auch eine Deckplatte 80 des Gehäuses 72 entfernt.

In dem Gehäuse 72 des Batteriepacks 50 sind mehrere Batteriemodule 60 angeordnet. Jedes der Batteriemodule 60 umfasst mehrere Batteriezellen 2, welche in dieser Darstellung nicht sichtbar sind, sowie Spannplatten 58, welche seitlich der Batteriezellen 2 angeordnet sind. In der gezeigten Darstellung verdecken die Spannplatten 58 die Batteriezellen 2.

Die Batteriemodule 60 sind dabei an dem Rahmen 82 fixiert. Vorliegend sind die Batteriemodule 60 dabei an den Seitenwänden 74 sowie an der Trennwand 78 befestigt. Außerhalb des Gehäuses 72 sind mehrere Kühlplatten 62 angeordnet, welche Teil eines Kühlsystems sind. Die Kühlplatten 62 liegen dabei flächig an einer Deckplatte 80 des Gehäuses 72 an.

Das Gehäuse 72 des Batteriepacks 50 ist aus einem Metall, vorliegend aus Aluminium, gefertigt. Insbesondere sind die Deckplatten 80 aus einem Metall, vorliegend aus Aluminium, gefertigt und weisen somit eine verhältnismäßig hohe Wärmeleitfähigkeit auf.

Die Kühlplatten 62 umfassen Kühlmittelanschlüsse 66, welche der Zuleitung sowie der Ableitung eines Kühlmittels dienen. Vorliegend handelt es sich dabei um ein flüssiges Kühlmittel, es ist aber auch denkbar, dass das Kühlmittel gasförmig vorliegt. In der gezeigten Darstellung teilen sich je zwei Kühlplatten 62 zwei Kühlmittelanschlüsse 66.

Bei einer Erwärmung der Batteriezellen 2 im Inneren des Gehäuses 72 erfolgt eine Wärmeabfuhr durch die Deckplatte 80 des Gehäuses 72 hindurch zu den Kühlplatten 62. Von den Kühlplatten 62 wird die aufgenommene Wärme von der Kühlflüssigkeit dann durch einen der Kühlmittelanschlüsse 66 hindurch abtransportiert.

In den Seitenwänden 74 sowie in der Trennwand 78 des Rahmens 82 sind ferner zusätzliche Strömungskanäle 64 vorgesehen. Besagte Strömungskanäle 64 sind ebenfalls Teil des Kühlsystems des Batteriepacks 50. Es ist ferner denkbar, dass in den Frontwänden 76 des Rahmens 82 ebenfalls Strömungskanäle 64 vorgesehen sind.

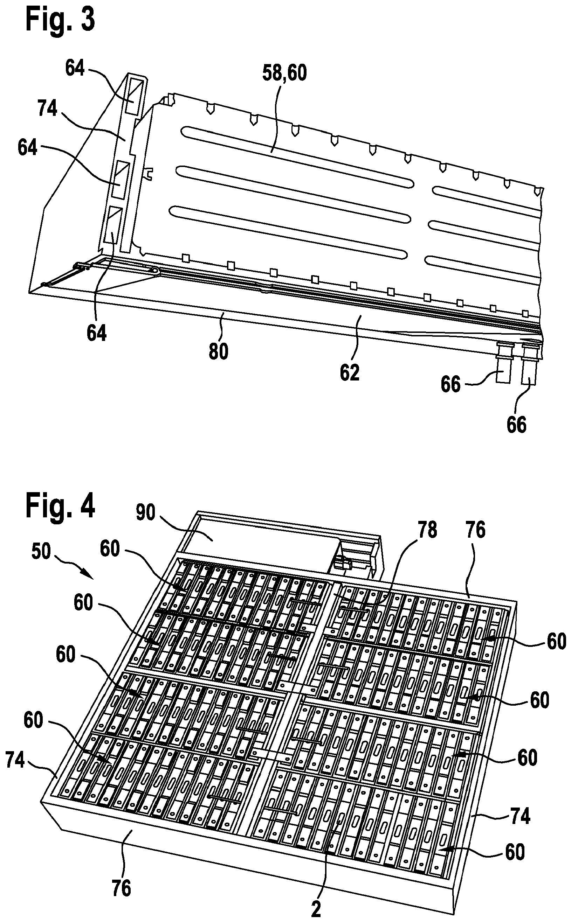

Figur 3 zeigt eine vergrößerte Darstellung eines Teilbereichs aus Figur 2. Dabei ist insbesondere eine der beiden Seitenwände 74 vergrößert dargestellt. Die hier dargestellte Seitenwand 74 umfasst mehrere, vorliegend drei, Strömungskanäle 64.

Eine Kühlflüssigkeit strömt durch besagte Strömungskanäle 64. Bei Erwärmung der Batteriezellen 2 erfolgt somit eine zusätzliche Wärmeabfuhr durch die Seitenwand 74 des Rahmens 82 hindurch zu der Kühlflüssigkeit, welche durch die Strömungskanäle 64 strömt. Ebenso erfolgt eine zusätzliche Kühlung über die hier nicht gezeigte Trennwand 78, welche ebenfalls Strömungskanäle 64 aufweist, die von dem Kühlmittel durchströmt sind.

Figur 4 zeigt eine weitere perspektivische Darstellung des Batteriepacks 50 aus einer anderen Perspektive. In der gezeigten Darstellung ist dabei eine Deckplatte 80 des Gehäuses 72 entfernt.

Das Batteriepack 50 umfasst dabei mehrere, vorliegend acht, Batteriemodule 60. Jedes der Batteriemodule 60 umfasst mehrere Batteriezellen 2. Vorliegend sind die Batteriemodule 60 gleichartig aufgebaut und umfassen jeweils dreizehn Batteriezellen 2. Die Batteriezellen 2 sind dabei nebeneinander angeordnet und beidseitig von hier nicht gezeigten Spannplatten 58 umgeben.

Die Batteriemodule 60 sind vorliegend in zwei Gruppen zu jeweils vier Batteriemodulen 60 angeordnet. Dabei ist auf jeder Seite der Trennwand 78 jeweils eine Gruppe mit vier Batteriemodulen 60 angeordnet. Außerhalb des Gehäuses 72 ist zusätzlich ein Steuermodul 90 zur Steuerung und Überwachung des Batteriepacks 50 vorgesehen.

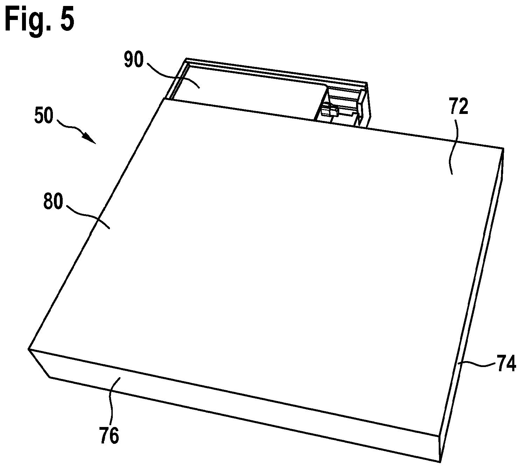

Figur 5 zeigt eine perspektivische Darstellung eines vollständigen Batteriepacks 50. In der hier gezeigten Darstellung ist dabei die Deckplatte 80 sichtbar, welche die Batteriemodule 60 mit den Batteriezellen 2, sowie die Trennwand 78 verdeckt.

Das Gehäuse 72 des Batteriepacks 50 ist dabei gasdicht ausgebildet. Sofern Gas aus einer Batteriezelle 2 austritt, verbleibt dieses innerhalb des Gehäuses 72. Das Gehäuse 72 umfasst zusätzlich eine hier nicht dargestellte Austrittsöffnung. Sofern bei einem Störfall Gas aus einer Batteriezelle 2 freigesetzt wird und dadurch ein Überdruck innerhalb des Gehäuses 72 entsteht, so öffnet besagte Austrittsöffnung und lässt das freigesetzte Gas kontrolliert entweichen. Dadurch wird ein Überdruck innerhalb des Gehäuses 72 vermieden, der sonst zu einer Explosion des Gehäuses 72 führen könnte.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Batteriepack (50), umfassend
ein gasdicht ausgebildetes Gehäuse (72),
in dem mehrere Batteriemodule (60) mit mehreren Batteriezellen (2) angeordnet sind, wobei
das Gehäuse (72) zwei parallel verlaufende Seitenwände (74) und zwei parallel verlaufende Frontwände (76) umfasst, welche miteinander verbunden sind und einen Rahmen (82) bilden und wobei der Rahmen (82) eine mit den Frontwänden (76) verbundene Trennwand (78) umfasst, welche
parallel zu den Seitenwänden (74) verläuft, wobei
die Batteriemodule (60) in zwei Gruppen zu jeweils vier Batteriemodulen (60) angeordnet sind und auf jeder Seite der Trennwand (78) jeweils
eine Gruppe mit vier Batteriemodulen (60) angeordnet ist sowie ein Kühlsystem zur Kühlung der mindestens einen Batteriezelle (2), wobei
das Kühlsystem mindestens eine Kühlplatte (62) umfasst, welche außerhalb des Gehäuses (72) angeordnet ist, wobei
die mindestens eine Kühlplatte (62) flächig an einer Deckplatte (80) des Gehäuses (72) anliegt, und wobei
eine Wärmeabfuhr von der mindestens einen Batteriezelle (2) durch die Deckplatte (80) hindurch zu der Kühlplatte (62) erfolgt.

2. Batteriepack (50) nach Anspruch 1, **dadurch gekennzeichnet, dass** das mindestens eine Batteriemodul (60) an dem Rahmen (82) fixiert ist.

3. Batteriepack (50) nach einem der Ansprüche 1 bis 2, **dadurch gekennzeichnet, dass** das Gehäuse (72) zwei parallel verlaufende Deckplatten (80) umfasst, welche den Rahmen (82) beidseitig verschließen.

4. Batteriepack (50) nach einem der Ansprüche 1 bis 3, **dadurch gekennzeichnet, dass** das Kühlsystem mindestens einen Strömungskanal (64) umfasst, welcher in mindestens einer Seitenwand (74) und/oder in mindestens einer Frontwand (76) des Rahmens (82) vorgesehen ist.

5. Batteriepack (50) nach Anspruch 1 bis 4, **dadurch gekennzeichnet, dass** das Kühlsystem mindestens einen Strömungskanal (64) umfasst, welcher in der Trennwand (78) vorgesehen ist.

6. Batteriepack (50) nach einem der vorstehenden Ansprüche 1 bis 5, **dadurch gekennzeichnet, dass** das Kühlsystem ein flüssiges Kühlmedium umfasst.

7. Verwendung eines Batteriepacks (50) nach einem der vorstehenden Ansprüche in einem Elektrofahrzeug (EV), in einem Hybridfahrzeug (HEV), in einem Plug-In-Hybridfahrzeug (PHEV), in einerstationären Batterie oder in einer Batterie in einer marinen Anwendung.

## Claims

1. Battery pack (50), comprising
a housing (72) of gas-tight design,
in which a plurality of battery modules (60) having a plurality of battery cells (2) are arranged, wherein the housing (72) comprises two parallel side walls (74) and
two parallel front walls (76), which parallel walls are connected to one another and form a frame (82), and
wherein
the frame (82) comprises a separating wall (78) which is connected to the front walls (76) and
runs parallel to the side walls (74), wherein
the battery modules (60) are arranged in two groups of in each case four battery modules (60) and
a group comprising four battery modules (60) is arranged on each side of the separating wall (78), and also
a cooling system for cooling the at least one battery cell (2), wherein
the cooling system comprises at least one cooling plate (62) which
is arranged outside the housing (72), wherein
the at least one cooling plate (62) bears flat against a covering plate (80) of the housing (72), and wherein heat is dissipated from the at least one battery cell (2), through the covering plate (80), to the cooling plate (62).

2. Battery pack (50) according to Claim 1, **characterized in that**
the at least one battery module (60) is fixed to the frame (82).

3. Battery pack (50) according to either of Claims 1 and 2, **characterized in that**
the housing (72) comprises two parallel covering plates (80) which close the frame (82) on either side.

4. Battery pack (50) according to one of Claims 1 to 3, **characterized in that**
the cooling system comprises at least one flow duct (64) which is provided in at least one side wall (74) and/or in at least one front wall (76) of the frame (82).

5. Battery pack (50) according to Claims 1 to 4, **characterized in that**
the cooling system comprises at least one flow duct (64) which is provided in the separating wall (78).

6. Battery pack (50) according to one of the preceding Claims 1 to 5, **characterized in that**
the cooling system comprises a liquid cooling medium.

7. Use of a battery pack (50) according to one of the preceding claims in an electric vehicle (EV), in a hybrid vehicle (HEV), in a plug-in hybrid vehicle (PHEV), in a stationary battery or in a battery for a marine application.

## Revendications

1. Bloc de batterie (50), comprenant
un boîtier (72) de configuration hermétique aux gaz, dans lequel sont disposés plusieurs modules de batterie (60) comprenant plusieurs cellules de batterie (2),
le boîtier (72) comportant deux parois latérales (74) qui suivent un tracé parallèle et
deux parois avant (76) qui suivent un tracé parallèle, lesquelles sont reliées entre elles et forment un cadre (82) et
le cadre (82) comportant une paroi de séparation (78) reliée aux parois avant (76), laquelle suit un tracé parallèle aux parois latérales (74),
les modules de batterie (60) étant disposés en deux groupes de respectivement quatre modules de batterie (60) et un groupe de quatre modules de batterie (60) étant respectivement disposé de chaque côté de la paroi de séparation (78) ainsi qu'un système de refroidissement destiné à refroidir l'au moins une cellule de batterie (2),
le système de refroidissement comportant au moins une plaque de refroidissement (62), laquelle est disposée en-dehors du boîtier (72),
l'au moins une plaque de refroidissement (62) reposant à plat sur une plaque de recouvrement (80) du boîtier (72), et
une évacuation de chaleur s'effectuant depuis l'au moins une cellule de batterie (2) vers la plaque de refroidissement (62) en passant à travers la plaque de recouvrement (80).

2. Bloc de batterie (50) selon la revendication 1, **caractérisé en ce que** l'au moins un module de batterie (60) est calé au niveau du cadre (82).

3. Bloc de batterie (50) selon l'une des revendications 1 à 2, **caractérisé en ce que** le boîtier (72) comporte deux plaques de recouvrement (80) qui suivent un tracé parallèle, lesquelles ferment le cadre (82) des deux côtés.

4. Bloc de batterie (50) selon l'une des revendications 1 à 3, **caractérisé en ce que** le système de refroidissement comporte au moins un canal d'écoulement (64), lequel est disposé dans au moins une paroi latérale (74) et/ou dans au moins une paroi avant (76) du cadre (82) .

5. Bloc de batterie (50) selon l'une des revendications 1 à 4, **caractérisé en ce que** le système de refroidissement comprend au moins un canal d'écoulement (64), lequel est disposé dans la paroi de séparation (78).

6. Bloc de batterie (50) selon l'une des revendications 1 à 5, **caractérisé en ce que** le système de refroidissement comporte un fluide de refroidissement liquide.

7. Utilisation d'un bloc de batterie (50) selon l'une des revendications précédentes dans un véhicule électrique (EV), dans un véhicule hybride (HEV), dans un véhicule hybride rechargeable (PHEV), dans une batterie fixe ou dans une batterie dans une application maritime.
